# EUROPEAN PATENT APPLICATION

(11) **EP 4 432 716 A1**
(43) Date of publication of application: **18.09.2024**
(21) Application number: 22891925.4
(22) Date of filing: 07.11.2022
(51) Int. Cl.: H04W 16/14

(54) **PERCEPTION METHOD AND APPARATUS, AND COMMUNICATION DEVICE**

(30) Priority: 12.11.2021 CN 202111339850
(71) Applicant: Vivo Mobile Communication Co., Ltd., Dongguan, Guangdong 523863 (CN)
(72) Inventor: YAO, Jian, Dongguan, Guangdong 523863 (CN); JIANG, Dajie, Dongguan, Guangdong 523863 (CN); YUAN, Yannan, Dongguan, Guangdong 523863 (CN); DING, Shengli, Dongguan, Guangdong 523863 (CN); LI, Jianzhi, Dongguan, Guangdong 523863 (CN)
(74) Representative: Conti, Marco
(86) International application number: PCT/CN2022/130258
(87) International publication number: WO 2023/083131

(57) **Abstract**

This application discloses a sensing method and apparatus, and a communication device, and pertains to the field of communication technologies. The method of embodiments of this application includes: receiving, by a first device, a first request, where the first request is used for requesting to enable or disable a sensing function of a second device; and transmitting, by the first device, an indication message to the second device according to the first request, where the indication message is used to indicate the second device to enable or disable the sensing function.

## Description

### CROSS-REFERENCE TO RELATED APPLICATIONS

This application claims priority to Chinese Patent Application No. 202111339850.0, filed in China on November 12, 2021, which is incorporated herein by reference in its entirety.

### TECHNICAL FIELD

This application relates to the field of communication technologies, and particularly to a sensing method and apparatus, and a communication device.

### BACKGROUND

Future mobile communication systems have a sensing capability in addition to the communication capability. The sensing capability means that one or more devices with a sensing capability can, by transmitting and receiving radio signals, perceive orientation, distance, velocity, and other information of a target object, or perform operations such as detection, tracking, recognition, or imaging on a target object, event, environment, or the like. For integrated communication-sensing scenarios, due to security, privacy, or policy requirements, or the like, it is necessary to enable or disable the sensing function of some designated base stations and/or terminals under certain conditions. Currently, there is no clear solution for enabling/disabling the sensing function.

### SUMMARY

Embodiments of this application provide a sensing method and apparatus, and a communication device, which can solve the problem of enabling or disabling the sensing function.

According to a first aspect, a sensing method is provided, including:
receiving, by a first device, a first request, where the first request is used for requesting to enable or disable a sensing function of a second device; and
transmitting, by the first device, an indication message to the second device according to the first request, where the indication message is used to indicate the second device to enable or disable the sensing function.

According to a second aspect, a sensing method is provided, including:
receiving, by a second device, an indication message, where the indication message is used to indicate the second device to enable or disable a sensing function; and
enabling or disabling, by the second device, the sensing function according to the indication message.

According to a third aspect, a sensing apparatus is provided, including:
a first receiving module, configured to receive a first request, where the first request is used for requesting to enable or disable a sensing function of a second device; and
a first transmitting module, configured to transmit an indication message to the second device according to the first request, where the indication message is used to indicate the second device to enable or disable the sensing function.

According to a fourth aspect, a sensing apparatus is provided, including:
a second receiving module, configured to receive an indication message, where the indication message is used to indicate a second device to enable or disable a sensing function; and
a processing module, configured to enable or disable the sensing function according to the indication message.

According to a fifth aspect, a communication device is provided, where the communication device includes a processor, a memory, and a program or instructions stored in the memory and capable of running on the processor, and when the program or instructions are executed by the processor, the steps of the method according to the first aspect or the second aspect are implemented.

According to a sixth aspect, a communication device is provided, including a processor and a communication interface, where the communication interface is configured to: receive a first request, where the first request is used for requesting to enable or disable a sensing function of a second device; and transmit an indication message to the second device according to the first request, where the indication message is used to indicate the second device to enable or disable the sensing function; or the communication interface is configured to receive an indication message, where the indication message is used to indicate a second device to enable or disable a sensing function; and the processor is configured to enable or disable the sensing function according to the indication message.

According to a seventh aspect, a readable storage medium is provided, where the readable storage medium has a program or instructions stored thereon; and when the program or instructions are executed by a processor, the steps of the method according to the first aspect are implemented, or the steps of the method according to the second aspect are implemented.

According to an eighth aspect, a chip is provided, where the chip includes a processor and a communication interface; the communication interface is coupled to the processor; and the processor is configured to run a program or instructions to implement the method according to the first aspect or the method according to the second aspect.

According to a ninth aspect, a computer program product is provided, where the computer program product is stored in a non-transitory storage medium, and the computer program product is executed by at least one processor so as to implement the steps of the method according to the first aspect or the second aspect.

In the embodiments of this application, a first device receives a first request, where the first request is used for requesting to enable or disable a sensing function of a second device; and the first device transmits an indication message to the second device according to the first request, where the indication message is used to indicate the second device to enable or disable the sensing function, such that the second device can enable or disable the sensing function according to the indication message, thereby achieving the purpose of enabling or disabling the sensing function.

### BRIEF DESCRIPTION OF DRAWINGS

FIG. 1 is a structural diagram of a communication system to which embodiments of this application are applicable;
FIG. 2 is a first schematic flowchart of a sensing method according to an embodiment of this application;
FIG. 3 is a second schematic flowchart of a sensing method according to an embodiment of this application;
FIG. 4 is a first schematic interactive diagram of a sensing method according to an embodiment of this application;
FIG. 5 is a second schematic interactive diagram of a sensing method according to an embodiment of this application;
FIG. 6 is a third schematic interactive diagram of a sensing method according to an embodiment of this application;
FIG. 7 is a schematic diagram of interfaces between a sensing network element and a base station according to an embodiment of this application;
FIG. 8 is a first schematic modular diagram of a sensing apparatus according to an embodiment of this application;
FIG. 9 is a second schematic modular diagram of a sensing apparatus according to an embodiment of this application;
FIG. 10 is a structural block diagram of a communication device according to an embodiment of this application;
FIG. 11 is a structural block diagram of a terminal according to an embodiment of this application; and
FIG. 12 is a structural block diagram of a network device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for illustration purposes, NR terms are used in most of the following descriptions, and these technologies may also be applied to other applications than the NR system application, for example, 6^{th} generation (6^{th} Generation, 6G) communications systems.

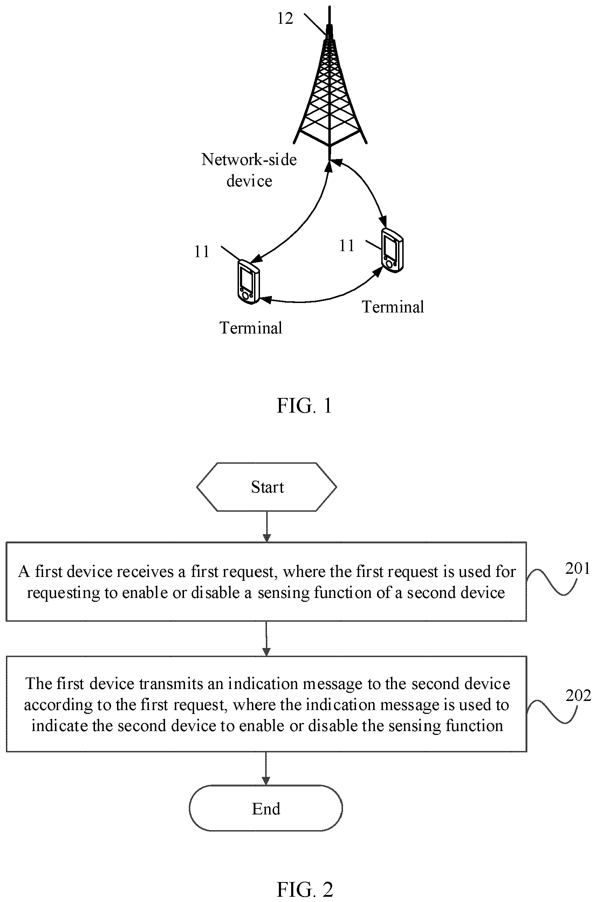

FIG. 1 is a structural diagram of a wireless communication system to which embodiments of this application are applicable. The wireless communication system includes a terminal 11 and a network-side device 12. The terminal 11 may also be referred to as a terminal device or user equipment (User Equipment, UE). The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicular user equipment (Vehicle User Equipment, VUE), pedestrian user equipment (Pedestrian User Equipment, PUE), smart home (a home device with wireless communication, such as refrigerator, TV, washing machine or furniture), where the wearable device includes a smart watch, a smart wrist strap, a smart headphone, a smart glasses, a smart jewelry (smart bracelet, smart chain bracelet, a smart ring, smart necklace, smart anklet, smart chain anklet, and the like), a smart wristband, a smart clothing, a game console, and the like. It should be noted that the terminal 11 is not limited to any particular type in the embodiments of this application. The network-side device 12 may be a base station or a core network device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN (Wireless Local Area Network, WLAN) access point, a wireless fidelity (Wireless Fidelity, Wi-Fi) node, a transmission reception point (Transmitting Receiving Point, TRP), or some other appropriate terms in the art. The base station is not limited to a specific technical term as long as the same technical effect is achieved.

To enable those skilled in the art to better understand the embodiments of this application, the following descriptions are provided first.

Integration of communication and sensing means realizing an integrated design of communication and sensing functions through spectrum sharing and hardware sharing in one system. While transmitting information, the system can sense information such as orientation, distance, and velocity, and detect, track, and identify a target device or an event. The communication system and the sensing system complement each other, thereby improving the overall performance and bringing better service experience.

A future mobile communication system such as a beyond 5G (Beyond 5G) B5G system or a 6G system has a sensing capability in addition to a communication capability. The sensing capability means that one or more devices with a sensing capability can, by transmitting and receiving radio signals, perceive orientation, distance, velocity, and other information of a target object, or perform an operation such as detection, tracking, recognition, or imaging on a target object, event, environment, or the like. In the future, with deployment of small base stations having high-band and large-bandwidth capabilities such as millimeter waves and terahertz in a 6G network, sensing resolution will be significantly improved as compared to centimeter waves. This enables the 6G network to provide more refined sensing services.

Integration of communication and radar is a typical application of communication-sensing integration. In the past, the radar system and communication system were strictly distinguished because of their different research objects and focuses, and these two systems were separately studied in most scenarios. Actually, the radar system and communication system are both typical ways of information transmission, acquisition, processing, and exchange, and have many similarities in working principle, system architecture, and frequency band. Integrated design of communication and radar is highly feasible, which is mainly reflected in the following aspects: Firstly, both the communication system and the sensing system are based on the electromagnetic wave theory, implementing information acquisition and transmission through transmission and reception of electromagnetic waves. Secondly, the communication system and the sensing system each have structures such as an antenna, a transmitter, a receiver, and a signal processor, resulting in significant overlap in hardware resources. As the technologies develop, they will have more overlaps in working band. In addition, they also have similarities in key technologies such as signal modulation and reception detection, and waveform design. Integration of the communication system and the radar system can bring many advantages, such as saving costs, reducing size, decreasing power consumption, improving spectrum efficiency, and reducing mutual interference, thereby improving the overall performance of the system.

Currently, there have been many related studies on the integrated design of radar system and communication system. A typical integrated design includes: spectrum coexistence, that is, the two systems work independently, allowing for information exchange to reduce mutual interference; receiver sharing, in which transmitters of the two systems transmit their respective signal waveforms, where the waveforms of the two systems need to be orthogonal, so as not to affect their respective reception and detection; transmitter sharing, that is, the transmitter transmits joint waveforms of radar and communication; and transmitter and receiver sharing, that is, the two systems share resources at the receivers and transmitters, where joint waveforms or orthogonal waveforms need to be used.

The sensing may be based on a single-station sensing mode, to be specific, the transmitter and the receiver are co-located, the transmitter transmits a sensing signal, and then receives and analyzes an echo signal to extract a sensing parameter, for example, the base station serves as the transmitter and receiver of the sensing signal, and a terminal or another object serves as a sensing target. Alternatively, the sensing may be based on a dual-station/multi-station sensing mode, to be specific, the transmitter and receiver are not co-located, the transmitter transmits a sensing signal, and another receiver receives and analyzes the sensing signal to extract a sensing parameter, for example, base station 1 serves as the transmitter of the sensing signal, and a terminal or base station 2 serves as the receiver of the sensing signal. Similarly, the transmitter in the single-station or multi-station sensing mode may alternatively be a terminal.

The following describes in detail a sensing method provided in the embodiments of this application by using some embodiments and application scenarios thereof with reference to the accompanying drawings.

As shown in FIG. 2, an embodiment of this application provides a sensing method including the following steps.

Step 201: A first device receives a first request, where the first request is used for requesting to enable or disable a sensing function of a second device.

In this embodiment of this application, the first device may be a device with an access and mobility management function (Access and Mobility Management Function, AMF), and the second device is at least one of a base station, a terminal, and a device with a sensing network function (also called a sensing network element); or
the first device is a device with a sensing network function, and the second device is at least one of a base station and a terminal; or
the first device is a base station, and the second device is a terminal.

The first request is determined based on at least one of the following:
core network; for example, communication-sensing integration protocol communication and sensing functions share spectrum resources, and in a communication-oriented scenario, when quality of service (Quality of Service, QoS) of communication cannot be guaranteed, a sensing function is enabled or disabled in a certain frequency spectrum or within a certain period of time;
offline subscription protocol; for example, in a case that some base stations are co-constructed (not exclusive to an operator) or a subscriber identity module (Subscriber Identity Module, SIM) card of UE is subscribed, some sensing functions of the base station or UE can be enabled or disabled through a protocol, where protocol information of the UE is stored in a unified data manager (Unified Data Manager, UDM), and related protocol information of the base station is stored by the operator or stored in a network node of the core network;
network management configuration; for example, for some specific areas, an operator enables or disables some sensing functions of base stations in these areas through the network management configuration;
external application, such as an application function (Application function, AF), to be specific, the foregoing first request is determined according to an external request from a network, for example, when there is a special circumstance in a certain area, a relevant management system or supervision software initiates a request for disabling the sensing function when detecting an invalid sensing request; and
request initiated by a base station or a terminal, where the request may be a request for enabling or disabling its own sensing function, or may be a request for enabling or disabling a sensing function of another device, for example, a base station requests to enable or disable a sensing function of UE accessing the base station.

Optionally, in this embodiment of this application, the sensing function includes at least one of the following:
characteristic information of a target object;
information related to a target event; and
information related to a target environment.

Optionally, the characteristic information of the target object includes at least one of the following:
existence information of the target object;
distance of the target object;
position of the target object;
velocity of the target object;
acceleration of the target object;
material of the target object;
shape of the target object;
category of the target object;
radar cross section (Radar Cross Section, RCS) of the target object; and
polarization scattering characteristic of the target object.

Optionally, the information related to a target event includes at least one of the following:
fall detection information;
intrusion detection information;
quantity statistics information;
indoor positioning information;
gesture recognition information;
lip recognition information;
gait recognition information;
expression recognition information;
respiratory monitoring information; and
heart rate monitoring information.

In this embodiment of this application, at least one sensing function may be enabled or disabled, or a preset category of sensing functions may be enabled or disabled. Optionally, the sensing function in foregoing step 201 includes a preset category of sensing functions; where
the preset category is classified based on at least one of the following:
scale range of a sensing function;
privacy requirement for a sensing function;
power consumption information corresponding to a sensing function;
resource occupation information corresponding to a sensing function; and
sensing measurement quantity corresponding to a sensing function.

For example, when categories of sensing functions are classified based on scale ranges of the sensing functions, sensing functions whose corresponding distances are less than a first preset threshold can be classified as a first category of sensing functions; or sensing functions whose corresponding ranges are less than a first preset range can be classified as a first category of sensing functions, and sensing functions whose corresponding distances are greater than or equal to the first preset threshold and less than a second preset threshold can be classified as a second category of sensing functions; or sensing functions whose corresponding ranges are greater than or equal to a first preset range but less than a second preset range are classified as a second category of sensing functions, and sensing functions whose corresponding distances are greater than or equal to the second preset threshold are classified as a third category of sensing functions; or sensing functions whose corresponding ranges are greater than or equal to a second preset range are classified as a third category of sensing functions. For example, material analysis, composition analysis, gesture recognition, lip recognition, gait recognition, expression recognition, facial recognition, respiratory monitoring, heart rate monitoring, pulse monitoring, and the like are classified as a first category of sensing functions; intrusion detection, quantity statistics, indoor positioning, and the like are classified as a second category of sensing functions; and humidity/brightness/temperature/atmospheric pressure monitoring, air quality monitoring, weather monitoring, environmental reconstruction, topography, building/vegetation distribution detection, visitors flow or traffic flow detection, and the like are classified as a third category of sensing functions.

For another example, when categories of sensing functions are classified according to a privacy requirement, sensing functions with a low privacy requirement are classified as a first category of sensing functions, and sensing functions with a high privacy requirement are classified as a second category of sensing functions, for example, humidity/brightness/temperature/atmospheric pressure monitoring, air quality monitoring, weather monitoring, environmental reconstruction, topography, building/vegetation distribution detection, and the like are classified as a first category of sensing functions, and intrusion detection, indoor positioning, gesture recognition, lip recognition, gait recognition, expression recognition, facial recognition, respiratory monitoring, heart rate monitoring, pulse monitoring, and the like are classified into a second category of sensing functions.

The sensing measurement quantity in this embodiment of this application includes at least one of the following:
channel matrix H;
received signal strength indicator (Received Signal Strength Indication, RSSI);
reference signal received power (Reference Signal Received Power, RSRP);
channel state information (Channel State Information, CSI);
power, delay, and/or angle information of each path in a multipath channel;
Doppler spread;
Doppler frequency shift;
phase difference between a first antenna and a second antenna;
delay difference between a first antenna and a second antenna;
characteristic difference between an I signal and a Q signal, for example, phase difference or amplitude difference between an I signal and a Q signal; and
angle related information.

Step 202: The first device transmits an indication message to the second device according to the first request, where the indication message is used to indicate the second device to enable or disable the sensing function.

In this embodiment of this application, the first device receives a first request, where the first request is used for requesting to enable or disable a sensing function of the second device; and the first device transmits an indication message to the second device according to the first request, where the indication message is used to indicate the second device to enable or disable the sensing function, such that the second device can enable or disable the sensing function according to the indication message, thereby achieving the purpose of enabling or disabling the sensing function.

Optionally, the first request includes at least one of the following:
sensing function enable or disable flag, where the flag is used to indicate that the first request is a request message for enabling or disabling the sensing function;
identification of the second device;
time when the sensing function is enabled or disabled, where the time when the sensing function is enabled or disabled includes at least one of a start time, an end time, and duration of the enabling or disabling;
area in which the sensing function is enabled or disabled;
type of the sensing function to be enabled or disabled, for example, allowing or prohibiting a target base station and/or terminal to participate in or from participating in environment reconstruction sensing services;
application scope of a sensing result, for example, setting a white list and black list using the sensing result, where the sensing result may be a sensing measurement result or may be a result obtained by further processing a sensing measurement result;
configuration information of a sensing reference node or sensing cooperative node to be enabled or disabled, where the sensing reference node may specifically be a reference node in a sensing measurement process, and the sensing cooperative node may specifically be a node that assists a sensing node in a sensing measurement process;
requirement information for sensing performance;
requirement information for a sensing mode;
requirement information for a sensing signal; and
requirement information for a sensing measurement result or sensing measurement quantity.

Optionally, the configuration information of a sensing reference node or sensing cooperative node to be enabled or disabled includes at least one of the following:
identification information of the sensing reference node or sensing cooperative node;
the number of sensing reference nodes or sensing cooperative nodes;
requirement information for a sensing measurement quantity or sensing measurement result of the sensing reference node or the sensing cooperative node;
requirement information for sensing performance of the sensing reference node or sensing cooperative node;
requirement information for a sensing mode of the sensing reference node or sensing cooperative node; and
requirement information for a sensing signal of the sensing reference node or sensing cooperative node.

Optionally, the indication message includes at least one of the following:
sensing function enable or disable flag;
identification of the second device;
time when the sensing function is enabled or disabled;
area in which the sensing function is enabled or disabled;
type of the sensing function to be enabled or disabled;
application scope of a sensing result;
configuration information of a sensing reference node or sensing cooperative node to be enabled or disabled;
requirement information for sensing performance;
requirement information for a sensing mode;
requirement information for a sensing signal; and
requirement information for a sensing measurement result or sensing measurement quantity.

Optionally, the requirement information for sensing performance includes at least one of the following:
maximum sensing resolution;
maximum sensing range;
minimum sensing delay, that is, reducing the timeliness of a sensing result to meet the security privacy requirement;
minimum sensing error or maximum sensing accuracy; and
maximum sensing information update frequency.

Optionally, the requirement information for the sensing mode (also called sensing method or sensing manner) includes at least one of the following:
single-station sensing mode, that is, a self-transmitting self-receiving sensing mode, for example, a sensing mode in which the first device transmits and receives a sensing signal;
multi-station sensing mode, in which the first device transmits a sensing signal and the second device receives the sensing signal, for example, uplink sensing (UE transmitting and base station receiving), downlink sensing (base station transmitting and UE receiving), transceiving sensing between base stations, and transceiving sensing between UEs;
multi-station cooperative sensing mode, to be specific, cooperative sensing between sensing nodes in which multiple devices transmit and receive by themselves or the first device transmits and the second device receives;
active sensing mode, to be specific, a sensing device actively emits a sensing signal for sensing;
passive sensing mode, to be specific, a sensing device collects a sensing signal in the environment for sensing;
continuous sensing mode or periodic sensing mode, to be specific, measuring sensing signals periodically for a long time for sensing; and
real-time sensing mode, to be specific, sensing through single or short-time sensing signal measurement.

Optionally, the requirement information for a sensing signal includes at least one of the following:
information about waveforms available for the sensing signal, for example, one or more of orthogonal frequency division multiplexing (Orthogonal Frequency Division Multiplexing, OFDM), SC-FDMA, orthogonal time frequency space (Orthogonal Time Frequency Space, OTFS), frequency modulated continuous wave (Frequency Modulated Continuous Wave, FMCW), and a pulse signal are prohibited or allowed;
maximum subcarrier spacing of the sensing signal, for example, a maximum allowable subcarrier spacing of an OFDM system is limited to 30 KHz;
maximum guard interval of the sensing signal, which is a time interval from a moment when transmitting of the signal ends to a moment when a latest echo signal of the signal is received; where this parameter is proportional to a maximum sensing distance, for example, the guard interval may be calculated according to 2dmax/c, where dmax is the maximum sensing distance (which belongs to the sensing requirement), for example, for a self-transmitted and self-received sensing signal, dmax represents a maximum distance from a sensing signal transmission and reception point to a signal reflection point; and in some cases, an OFDM signal cyclic prefix CP may function as a minimum guard interval, and limiting the maximum guard interval is also equivalent to limiting a maximum sensing distance, and c is the velocity of light;
maximum bandwidth of the sensing signal; where this parameter is inversely proportional to the range resolution and may be found based on c/2/delta_d, where delta_d is the range resolution (which belongs to the sensing requirement), and limiting the bandwidth is equivalent to limiting the range resolution;
maximum burst duration of the sensing signal; where this parameter is inversely proportional to the velocity resolution (which belongs to the sensing requirement), this parameter is a time span of the sensing signal and is mainly used for calculating a Doppler shift, and this parameter can be calculated according to c/2/delta_v/fc, where delta_v is the velocity resolution, fc is the central frequency of the signal, and limiting the maximum burst duration is equivalent to limiting the velocity resolution;
minimum time-domain interval of the sensing signal, where this parameter can be calculated according to c/2/fc/v_range, where v_range is the maximum velocity minus the minimum velocity (which belongs to the sensing requirement); this parameter is a time interval between two adjacent sensing signals, where fc is a carrier frequency of the signal; and limiting the minimum time interval is equivalent to limiting the maximum sensing velocity;
maximum transmit power or maximum equivalent isotropic radiated power (Equivalent Isotropic Radiated Power, EIRP) of the sensing signal; for example, the maximum transmitted power is limited to 10 dBm;
signal format usable for the sensing signal, for example, prohibiting the use of sounding reference signal (Sounding Reference Signal, SRS), demodulation reference signal (Demodulation Reference Signal, DMRS), positioning reference signal (Positioning Reference Signal, PRS), and the like, or prohibiting the use of other predefined signals, or prohibiting the use of related sequence formats;
signal direction of the sensing signal, such as a direction or beam information of the sensing signal;
time resource for the sensing signal, for example, limiting an index of a slot in which the sensing signal is located or an index of a symbol in the slot, where time resources are classified into two types: one type is one-off time resource, for example, an omnidirectional first signal is transmitted on one symbol; and the other type is non-one-off time resource, for example, in a plurality of groups of periodic time resources or discontinuous time resources (which may include a start time and an end time), sensing signals in a same direction are transmitted on each group of periodic time resources, and beam directions on periodic time resources of different groups are different;
frequency resource for the sensing signal, including limiting a central frequency, bandwidth, resource block (Resource Block, RB), subcarrier, or the like of the sensing signal;
antenna information corresponding to the sensing signal, for example, limiting a maximum number of transmitting antennas and/or receiving antennas of the sensing signal;
beam width of the sensing signal, where a angle measuring resolution and angle measuring accuracy can be limited by limiting the beam width;
quantization accuracy of digital-to-analog conversion D/A of the sensing signal, for example, limiting the sensitivity of visitors/traffic flow detection;
the number of cooperative detection devices corresponding to the sensing signal; and
cooperative detection mode corresponding to the sensing signal, for example, signal level cooperation or information level cooperation, where the former has high cooperative gain and the latter has low cooperative gain.

Optionally, the requirement information for the sensing measurement result or the sensing measurement quantity includes at least one of the following:
allowing or prohibiting measurement of at least one sensing measurement quantity; and
allowing or prohibiting reporting of at least one sensing measurement result.

For example, a base station and/or UE, when performing sensing related measurement, is not allowed to provide complete amplitude and phase information (or CSI) of a channel frequency domain response, and is only allowed to provide amplitude information (or received signal strength indication (Received Signal Strength Indication, RSSI) or reference signal received power (Reference Signal Received Power, RSRP)) of the channel frequency domain response.

Optionally, the method of this embodiment of this application further includes:
determining a target device meeting at least one of the following as the second device:
position of the target device is located in a preset area;
the target device has a target sensing capability;
an access device of the target device is located in a preset area; and
an access device of the target device has a target sensing capability.

The target device includes at least one of a base station and a terminal, and the target sensing capability may be a sensing capability supporting the sensing function; when the target device is a base station, an access device of the target device includes a terminal, and when the target device is a terminal, an access device of the target device includes a base station.

Optionally, the second device includes at least one device or sensing network element with a sensing network function, and the at least one device or sensing network element with a sensing network function is associated with the sensing function corresponding to the first request.

In this embodiment of this application, an AMF transmits a sensing function enable/disable indication message (that is, the foregoing indication message) to a device/sensing network element with a sensing network function according to a request for enabling/disabling the sensing function (that is, the foregoing first request), where the indication message may be transmitted to one device/sensing network element with a sensing network function or to a plurality of devices/sensing network elements with a sensing network function. The device/sensing network element with a sensing network function may be associated with different sensing functions or may be associated with sensing functions of a certain category (that is, the foregoing preset category of sensing functions). In this case, the AMF transmits a sensing function enable/disable indication message to different devices/sensing network elements with a sensing network function according to a sensing function or service type to be enabled/disabled in a sensing function enable/disable request message.

In this embodiment of this application, a characteristic of the device or sensing network element with a sensing network function includes at least one of the following:
interacting with a serving base station or UE of target UE (including processing a sensing request) to obtain a target sensing result or sensing measurement quantity (uplink measurement quantity or downlink measurement quantity);
determining, according to factors such as a possible type of a sensing client, required sensing QoS, UE sensing capability, or base station sensing capability, a sensing method to be used;
the sensing network element is located at a core network or base station side, where if the sensing network element is located at the base station side, the interactions between the base station and the core network can be reduced compared with being located at the core network side;
the sensing network element directly exchanges the sensing request and the sensing result with an application server (for example, an application server of a operator); or the sensing network element exchanges the sensing request and the sensing result with an AMF, and the AMF can directly or indirectly exchange the sensing request and the sensing result with an application server (for example, an application server of a third party) through a gateway mobile location center (Gateway Mobile Location Center, GMLC) and a network element function (Network Element Function, NEF);
managing overall coordination and scheduling of resources required for sensing, for example, sensing resources of base stations and/or UE;
calculating or verifying a sensing result, and estimating a sensing accuracy;
supporting an immediate sensing request;
supporting a periodic or event-triggered sensing request;
supporting cancellation of a periodic or triggered sensing behavior;
a plurality of sensing network elements can correspond to one AMF, where the AMF can select one or more participating sensing network elements after receiving the sensing requirement, and factors considered in the selection at least include: requested QoS (for example, sensing accuracy, response time, or sensing QoS level), access type (3rd generation partnership project (3rd Generation Partnership Project, 3GPP) access/non-3GPP access), a 5G access network (Access Network, AN) type (that is, 5G NR or eLTE) and serving AN node (that is, gNodeB or NG-eNodeB) of the target UE, RAN configuration information, network element sensing capability, sensing network element load, sensing network element location, indication of single event reporting or multiple event reporting, event reporting duration, network slice information, and the like; and
the sensing network element may be a new network element, or an existing network element such as a location management function (Location Management Function, LMF), but with a new sensing related function added.

In this embodiment of this application, the first device receives a first request, where the first request is used for requesting to enable or disable a sensing function of the second device; and the first device transmits an indication message to the second device according to the first request, where the indication message is used to indicate the second device to enable or disable the sensing function, such that the second device can enable or disable the sensing function according to the indication message, thereby achieving the purpose of enabling or disabling the sensing function.

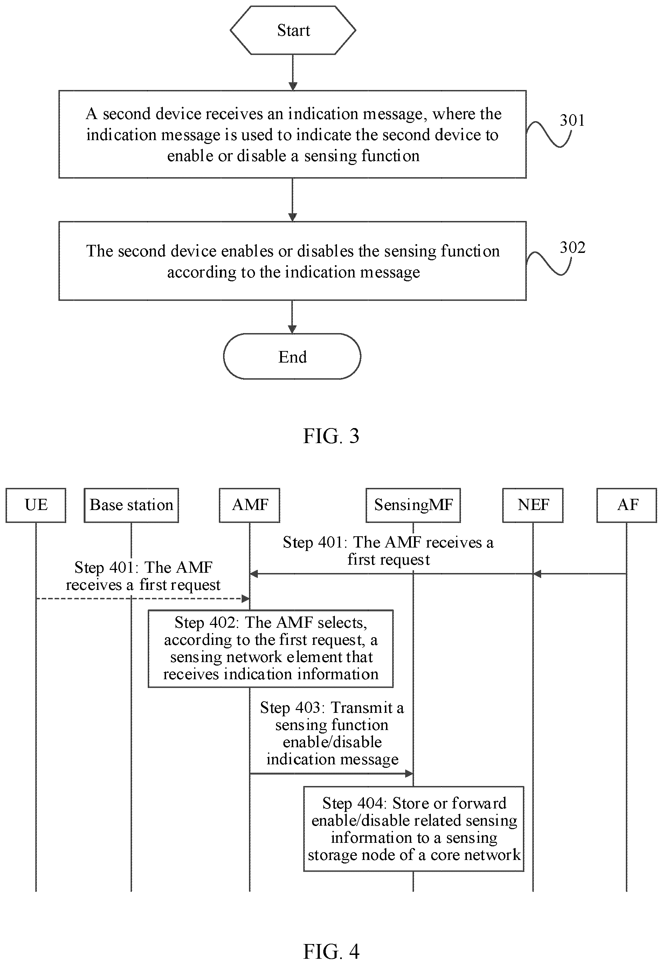

As shown in FIG. 3, an embodiment of this application further provides a sensing method including the following steps.

Step 301: A second device receives an indication message, where the indication message is used to indicate the second device to enable or disable a sensing function.

The indication information can be specifically transmitted by the first device according to a first request, where the first request is used for requesting to enable or disable the sensing function of the second device.

In this embodiment of this application, the first device may be a device with an access and mobility management function (Access and Mobility Management Function, AMF), and the second device is at least one of a base station, a terminal, and a device with a sensing network function (also called a sensing network element); or
the first device is a device with a sensing network function, and the second device is at least one of a base station and a terminal; or
the first device is a base station, and the second device is a terminal.

Step 302: The second device enables or disables the sensing function according to the indication message.

In this embodiment of this application, the second device receives the indication message, and enables or disables the sensing function according to the indication message, so as to achieve the purpose of enabling or disabling the sensing function.

Optionally, the indication message includes at least one of the following:
sensing function enable or disable flag;
identification of the second device;
time when the sensing function is enabled or disabled;
area in which the sensing function is enabled or disabled;
type of the sensing function to be enabled or disabled;
application scope of a sensing result;
configuration information of a sensing reference node or sensing cooperative node to be enabled or disabled;
requirement information for sensing performance;
requirement information for a sensing mode;
requirement information for a sensing signal; and
requirement information for a sensing measurement result or sensing measurement quantity.

Optionally, the requirement information for sensing performance includes at least one of the following:
maximum sensing resolution;
maximum sensing range;
minimum sensing delay;
minimum sensing error or maximum sensing accuracy; and
maximum sensing information update frequency.

Optionally, the requirement information for a sensing mode includes at least one of the following:
single-station sensing mode;
multi-station sensing mode;
multi-station cooperative sensing mode;
active sensing mode;
passive sensing mode;
continuous sensing mode; and
real-time sensing mode.

Optionally, the requirement information for a sensing signal includes at least one of the following:
information about waveforms available for the sensing signal;
maximum subcarrier spacing of the sensing signal;
maximum guard interval of the sensing signal;
maximum bandwidth of the sensing signal;
maximum burst duration of the sensing signal;
minimum time-domain interval of the sensing signal;
maximum transmit power or maximum equivalent isotropic radiated power EIRP of the sensing signal;
signal format usable for the sensing signal;
signal direction of the sensing signal;
time resource for the sensing signal;
frequency resource for the sensing signal;
antenna information corresponding to the sensing signal;
beam width of the sensing signal;
quantization accuracy of digital-to-analog conversion A/D of the sensing signal;
the number of cooperative detection devices corresponding to the sensing signal; and
cooperative detection mode corresponding to the sensing signal.

It should be noted that the indication information has been described in detail in the foregoing method embodiment of the first device, and will not be repeated herein.

Next, the sensing method of this application will be described with reference to specific embodiments.

### Embodiment 1:

As shown in FIG. 4, the method includes the following steps.

Step 401: An AMF receives a first request.

The first request may come from an external application or from a terminal and/or UE. The first request is used for requesting to enable or disable the sensing function of the second device, and the first request can also be called a sensing function enable or disable request.

Step 402: The AMF selects, according to the first request, a device with a sensing network function (sensing network element) that receives indication information.

Specifically, the enabled/disabled sensing function in the sensing function enable/disable request message selects a device (SensingMF) with a sensing network function, where a plurality of SensingMFs can be associated with different sensing functions or a certain category of sensing functions (for example, a preset category of sensing functions). Particularly, if a sensing function enable/disable/restriction flag in the sensing function enable/disable request is an enable/disable flag, or if the sensing function enable/disable request does not include an enabled/disabled sensing function or service type, to be specific, a corresponding target base station and/or UE is not allowed to participate in a sensing service (regardless of sensing function or service type), the AMF selects all SensingMFs as the SensingMF (which may be one or more) that receive the sensing function enable/disable instruction message.

This step 402 is an optional step.

Step 403: The AMF transmits a sensing function enable/disable indication message to the SensingMF.

Step 404: The SensingMF stores or forwards enable/disable related sensing information to a sensing storage node of a core network.

If a receiver of the sensing function enable/disable indication message is a device/sensing network element with a sensing network function, after receiving a sensing requirement, when selecting a base station and/or UE associated with a sensing service, the device/sensing network element with a sensing network function does not use the base station and/or UE whose sensing function is enabled/disabled or restricted as the base station and/or UE associated with the sensing service (the sensing function enable/disable indication message does not allow the base station and/or UE whose sensing function is enabled/disabled or restricted to be used as the base station and/or UE associated with this sensing service or as certain conditions of the base station and/or UE whose sensing function is enabled/disabled or restricted, for example, a restricted sensing signal configuration does not meet the sensing requirement).

### Embodiment 2:

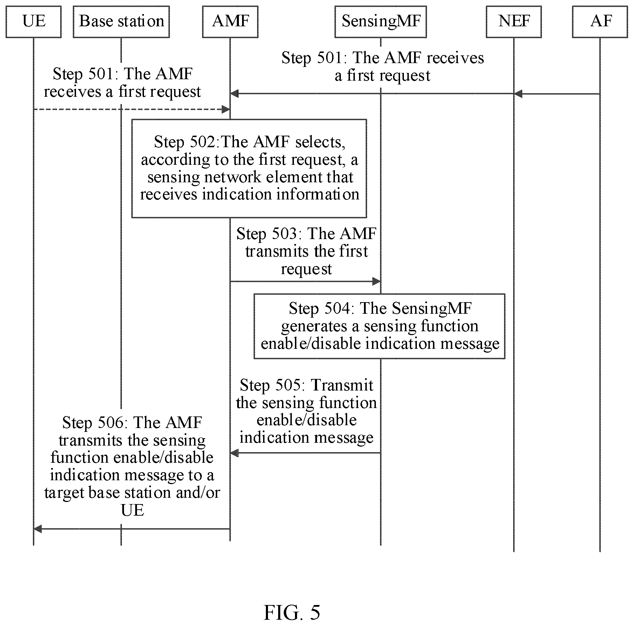

As shown in FIG. 5, the method includes the following steps.

Step 501: An AMF receives a first request.

The first request may come from an external application or from a terminal and/or UE. The first request is used for requesting to enable or disable the sensing function of the second device, and the first request can also be called a sensing function enable or disable request.

Step 502: The AMF selects, according to the first request, a device with a sensing network function (sensing network element) that receives the first request.

Specifically, the SensingMF is selected according to the enabled/disabled sensing function or service type in the sensing function enable/disable request message, where a plurality of SensingMFs may be associated with different sensing functions or may be associated with a certain category of sensing functions (for example, a preset category of sensing functions). Particularly, if a sensing function enable/disable/restriction flag in the sensing function enable/disable request is an enable/disable flag, or if the sensing function enable/disable request does not include an enabled/disabled sensing function or service type, to be specific, a corresponding target base station and/or UE is not allowed to participate in a sensing service (regardless of sensing function or service type), the AMF selects all SensingMFs as the SensingMF (which may be one or more) that receive the first request.

In this embodiment, the SensingMF is the first device, and the base station and/or UE is the second device. The first request is forwarded by the AMF to the SensingMF. This step 502 is an optional step.

Step 503: The AMF transmits the first request to the SensingMF.

Step 504: The SensingMF generates a sensing function enable/disable indication message.

For example, requirement information for a sensing signal and/or requirement information for reporting a sensing measurement result are obtained according to a sensing function or service restriction and/or sensing performance restriction in the sensing function enable/disable request.

Step 505: The SensingMF transmits the sensing function enable/disable indication message to the AMF.

Step 506: The AMF transmits the sensing function enable/disable indication message to a target base station and/or UE.

The foregoing step 503 and step 504 are optional steps.

If a receiver of the sensing function enable/disable indication message is a base station and/or UE, when receiving a sensing requirement and/or a sensing measurement quantity and/or sensing signal configuration associated with the sensing requirement, the base station and/or UE refuses to participate in the sensing measurement related to the sensing service and feeds back a rejection response message to a device/sensing network element with a sensing network function. Particularly, if a sensing signal configuration, sensing function, sensing mode, or other conditions of the base station and/or the UE with a sensing function whose sensing function is enabled/disabled or restricted can meet the sensing requirement after being restricted, the base station and/or UE with a sensing function whose sensing function is enabled/disabled or restricted normally participates in the sensing measurement related to the sensing service and feeds back a measurement result or sensing result.

### Embodiment 3:

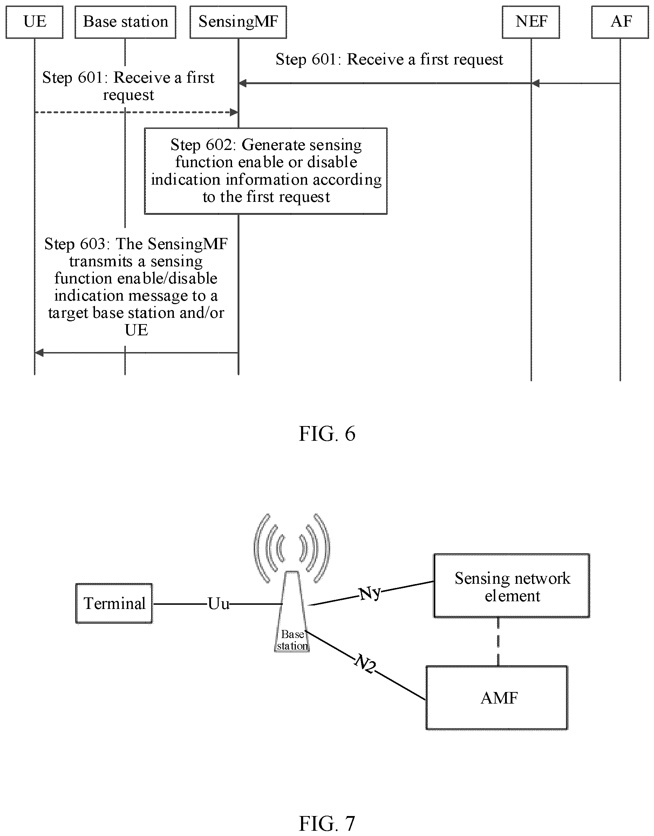

As shown in FIG. 6, the method includes the following steps.

Step 601: SensingMF receives a first request.

The first request may come from an external application or from a terminal and/or UE. The first request is used for requesting to enable or disable the sensing function of the second device, and the first request can also be called a sensing function enable or disable request.

Step 602: The SensingMF generates sensing function enable or disable indication information according to the first request.

For example, requirement information for a sensing signal and/or requirement information for reporting a sensing measurement result are obtained according to a sensing function or service restriction and/or sensing performance restriction in the sensing function enable/disable request.

The foregoing step 602 is an optional step.

Step 603: The SensingMF transmits a sensing function enable/disable indication message to a target base station and/or UE.

Optionally, the SensingMF stores, in a CP share or an unstructured data storage function (Unstructured Data Storage Function, UDSF) of the SensingMF itself, configuration information for which a decision is made to generate a sensing disable or enable restriction or performance restriction.

In this embodiment, a point-to-point interface (for example, Ny interface) is set up between the SensingMF and a RAN (base station). The Ny interface carries the transmission of control signaling and sensing measurement data related to a sensing task, as shown in FIG. 7.

### Embodiment 4:

This embodiment includes that: A base station receives a first request, and the base station transmits a sensing function enable/disable indication message to UE.

Specifically, the base station indicates the sensing function enable/disable indication message through broadcast signaling, or indicates the sensing function enable/disable indication message through UE-specific signaling.

For example, the base station transmits the sensing function enable/disable indication message through some bits in messages such as MIB or SIB1 or other SIBs.

For another example, when the UE is in an idle state or an inactive state, the base station transmits one or more of a paging early indicator (paging early indication, PEI)/paging physical downlink control channel (Physical Downlink Control Channel, PDSCH) or paging physical downlink shared channel (Physical Downlink Shared Channel, PDSCH) to indicate one or a group of UEs to enable/disable some sensing functions, or to reduce the accuracy of some sensing functions. For example, an indication is made using a bit or reserved bit of a short message in a paging PDCCH or paging PDSCH.

When the UE is in a connected state, the base station indicates one or a group of UEs to enable/disable some sensing functions or to reduce the accuracy of some sensing functions through layer 1 signaling, medium access control control element (Medium Access Control Control Element, MAC CE), radio resource control (Radio Resource Control, RRC) signaling.

In addition, content carried in the foregoing signaling may alternatively be notified by the base station to another base station, or notified by the UE to another UE, or notified by the UE to the base station (that is, the UE recommends to the base station which sensing functions can be enabled/disabled/used by the UE or the base station).

For example, a list of sensing functions (including enabled/disabled sensing functions) is transmitted by RRC or system information block (System Information Block, SIB); and the foregoing broadcast signaling or UE-specific signaling only indicates which ones in the list of sensing functions are usable and/or which ones are enabled/disabled. For example, the signaling includes 5 bits, 01110, which means that the first and fifth sensing functions are disabled and the rest sensing functions are usable.

In the sensing method this embodiment of this application, the first device receives a first request, where the first request is used for requesting to enable or disable a sensing function of the second device; and the first device transmits an indication message to the second device according to the first request, where the indication message is used to indicate the second device to enable or disable the sensing function, such that the second device can enable or disable the sensing function according to the indication message, thereby achieving the purpose of enabling or disabling the sensing function.

It should be noted that the sensing method provided in this embodiment of this application may be performed by a sensing apparatus, or a control module configured to perform the sensing method in the sensing apparatus. In this embodiment of this application, assuming that the sensing apparatus performs the sensing method, the sensing apparatus provided in this embodiment of this application is described.

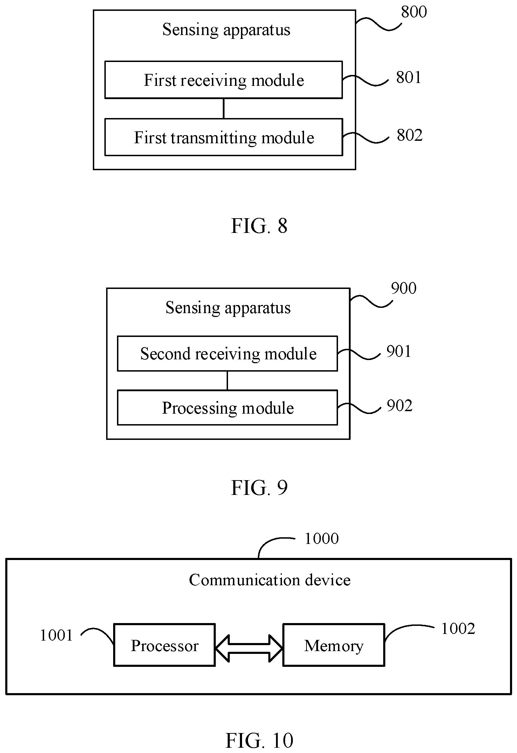

As shown in FIG. 8, an embodiment of this application provides a sensing apparatus 800, including:
a first receiving module 801, configured to receive a first request, where the first request is used for requesting to enable or disable a sensing function of a second device; and
a first transmitting module 802, configured to transmit an indication message to the second device according to the first request, where the indication message is used to indicate the second device to enable or disable the sensing function.

Optionally, the first request includes at least one of the following:
sensing function enable or disable flag;
identification of the second device;
time when the sensing function is enabled or disabled;
area in which the sensing function is enabled or disabled;
type of the sensing function to be enabled or disabled;
application scope of a sensing result;
configuration information of a sensing reference node or sensing cooperative node to be enabled or disabled;
requirement information for sensing performance;
requirement information for a sensing mode;
requirement information for a sensing signal; and
requirement information for a sensing measurement result or sensing measurement quantity.

Optionally, the configuration information of a sensing reference node or sensing cooperative node to be enabled or disabled includes at least one of the following:
identification information of the sensing reference node or sensing cooperative node;
the number of sensing reference nodes or sensing cooperative nodes;
requirement information for a sensing measurement quantity or sensing measurement result of the sensing reference node or the sensing cooperative node;
requirement information for sensing performance of the sensing reference node or sensing cooperative node;
requirement information for a sensing mode of the sensing reference node or sensing cooperative node; and
requirement information for a sensing signal of the sensing reference node or sensing cooperative node.

Optionally, the indication message includes at least one of the following:
sensing function enable or disable flag;
identification of the second device;
time when the sensing function is enabled or disabled;
area in which the sensing function is enabled or disabled;
type of the sensing function to be enabled or disabled;
application scope of a sensing result;
configuration information of a sensing reference node or sensing cooperative node to be enabled or disabled;
requirement information for sensing performance;
requirement information for a sensing mode;
requirement information for a sensing signal; and
requirement information for a sensing measurement result or sensing measurement quantity.

Optionally, the requirement information for sensing performance includes at least one of the following:
maximum sensing resolution;
maximum sensing range;
minimum sensing delay;
minimum sensing error or maximum sensing accuracy; and
maximum sensing information update frequency.

Optionally, the requirement information for a sensing mode includes at least one of the following:
single-station sensing mode;
multi-station sensing mode;
multi-station cooperative sensing mode;
active sensing mode;
passive sensing mode;
continuous sensing mode or periodic sensing mode; and
real-time sensing mode.

Optionally, the requirement information for a sensing signal includes at least one of the following:
information about waveforms available for the sensing signal;
maximum subcarrier spacing of the sensing signal;
maximum guard interval of the sensing signal;
maximum bandwidth of the sensing signal;
maximum burst duration of the sensing signal;
minimum time-domain interval of the sensing signal;
maximum transmit power or maximum equivalent isotropic radiated power EIRP of the sensing signal;
signal format usable for the sensing signal;
signal direction of the sensing signal;
time resource for the sensing signal;
frequency resource for the sensing signal;
antenna information corresponding to the sensing signal;
beam width of the sensing signal;
quantization accuracy of digital-to-analog conversion D/A of the sensing signal;
the number of cooperative detection devices corresponding to the sensing signal; and
cooperative detection mode corresponding to the sensing signal.

Optionally, the requirement information for the sensing measurement result or the sensing measurement quantity includes at least one of the following:
allowing or prohibiting measurement of at least one sensing measurement quantity; and
allowing or prohibiting reporting of at least one sensing measurement result.

Optionally, the apparatus of this embodiment of this application further includes:
a determining module, configured to determine a target device meeting at least one of the following as the second device;
position of the target device is located in a preset area;
the target device has a target sensing capability;
an access device of the target device is located in a preset area; and
an access device of the target device has a target sensing capability.

Optionally, the second device includes at least one device or sensing network element with a sensing network function, and the at least one device or sensing network element with a sensing network function is associated with the sensing function corresponding to the first request.

Optionally, the sensing function includes a preset category of sensing functions; where
the preset category is classified based on at least one of the following:
scale range of a sensing function;
privacy requirement for a sensing function;
power consumption information corresponding to a sensing function;
resource occupation information corresponding to a sensing function; and
sensing measurement quantity corresponding to a sensing function.

Optionally, the first device is a device with a sensing network function, and the second device includes at least one of a base station and a terminal; or
the first device is a base station, and the second device is a terminal; or
the first device is a device with an access and mobility management function, and the second device includes at least one of a base station, a terminal, and a device with a sensing network function.

In this embodiment of this application, the first device receives a first request, where the first request is used for requesting to enable or disable a sensing function of the second device; and the first device transmits an indication message to the second device according to the first request, where the indication message is used to indicate the second device to enable or disable the sensing function, such that the second device can enable or disable the sensing function according to the indication message, thereby achieving the purpose of enabling or disabling the sensing function.

As shown in FIG. 9, an embodiment of this application provides a sensing apparatus 900, including:
a second receiving module 901, configured to receive an indication message, where the indication message is used to indicate a second device to enable or disable a sensing function; and
a processing module 902, configured to enable or disable the sensing function according to the indication message.

Optionally, the indication message includes at least one of the following:
sensing function enable or disable flag;
identification of the second device;
time when the sensing function is enabled or disabled;
area in which the sensing function is enabled or disabled;
type of the sensing function to be enabled or disabled;
application scope of a sensing result;
configuration information of a sensing reference node or sensing cooperative node to be enabled or disabled;
requirement information for sensing performance;
requirement information for a sensing mode;
requirement information for a sensing signal; and
requirement information for a sensing measurement result or sensing measurement quantity.

Optionally, the requirement information for sensing performance includes at least one of the following:
maximum sensing resolution;
maximum sensing range;
minimum sensing delay;
minimum sensing error or maximum sensing accuracy; and
maximum sensing information update frequency.

Optionally, the requirement information for a sensing mode includes at least one of the following:
single-station sensing mode;
multi-station sensing mode;
multi-station cooperative sensing mode;
active sensing mode;
passive sensing mode;
continuous sensing mode; and
real-time sensing mode.

Optionally, the requirement information for a sensing signal includes at least one of the following:
information about waveforms available for the sensing signal;
maximum subcarrier spacing of the sensing signal;
maximum guard interval of the sensing signal;
maximum bandwidth of the sensing signal;
maximum burst duration of the sensing signal;
minimum time-domain interval of the sensing signal;
maximum transmit power or maximum equivalent isotropic radiated power EIRP of the sensing signal;
signal format usable for the sensing signal;
signal direction of the sensing signal;
time resource for the sensing signal;
frequency resource for the sensing signal;
antenna information corresponding to the sensing signal;
beam width of the sensing signal;
quantization accuracy of digital-to-analog conversion D/A of the sensing signal;
the number of cooperative detection devices corresponding to the sensing signal; and
cooperative detection mode corresponding to the sensing signal.

In this embodiment of this application, a first device receives a first request, where the first request is used for requesting to enable or disable a sensing function of a second device; and the first device transmits an indication message to the second device according to the first request, where the indication message is used to indicate the second device to enable or disable the sensing function, such that the second device can enable or disable the sensing function according to the indication message, thereby achieving the purpose of enabling or disabling the sensing function.

Optionally, as shown in FIG. 10, an embodiment of this application further provides a communication device 1000, including a processor 1001, a memory 1002, and a program or instructions stored in the memory 1002 and capable of running on the processor 1001. When the program or instructions are executed by the processor 1001, each process of the foregoing sensing method embodiments is implemented, with the same technical effects achieved. To avoid repetition, details are not described herein again.

An embodiment of this application further provides a communication device, where the communication device may specifically be the foregoing first device or the second device; the communication device includes a processor and a communication interface; when the communication device is the foregoing first device, the communication interface is configured to: receive a first request, where the first request is used for requesting to enable or disable a sensing function of a second device; and transmit an indication message to the second device according to the first request, where the indication message is used to indicate the second device to enable or disable the sensing function; and when the communication device is the foregoing second device, the communication interface is configured to receive an indication message, where the indication message is used to indicate the second device to enable or disable a sensing function; and the processor is configured to enable or disable the sensing function according to the indication message.

The communication device embodiment corresponds to the foregoing device method embodiment. All implementations in the foregoing method embodiment may be applicable to the communication device embodiment, with the same technical effect achieved.

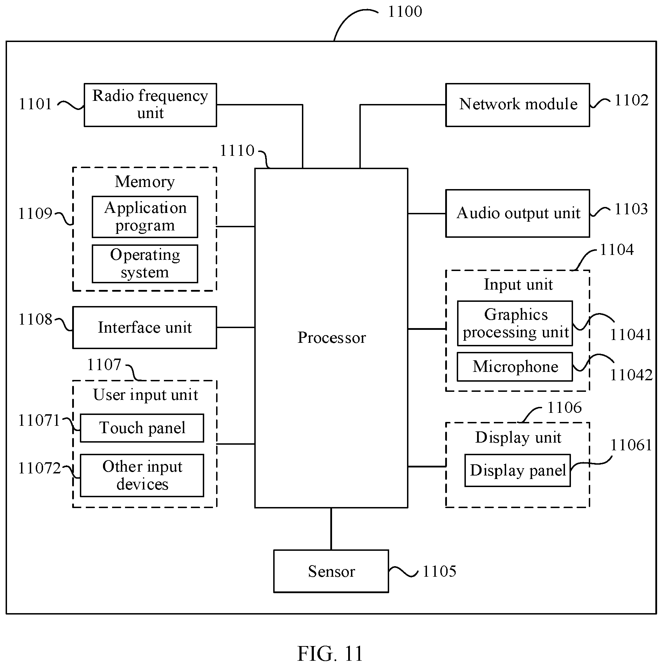

Specifically, FIG. 11 is a schematic diagram of a hardware structure of a communication device for implementing the embodiments of this application. The communication device is specifically a terminal. The terminal 1100 includes but is not limited to at least some components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

It can be understood by those skilled in the art that the terminal 1100 may further include a power supply (for example, a battery) supplying power to the components. The power supply may be logically connected to the processor 1110 via a power management system, so that functions such as charge management, discharge management, and power consumption management are implemented by using the power management system. The structure of the terminal shown in FIG. 11 does not constitute any limitation on the terminal, and the terminal may include more or fewer components than shown in the figure, or combine some of the components, or have different arrangements of the components. Details are not described herein.

It should be understood that in this embodiment of this application, the input unit 1104 may include a graphics processing unit (Graphics Processing Unit, GPU) 11041 and a microphone 11042. The graphics processing unit 11041 processes image data of a static picture or a video that is obtained by an image capture apparatus (for example, a camera) in a video capture mode or an image capture mode. The display unit 1106 may include a display panel 11061. The display panel 11061 may be configured in a form of a liquid crystal display, an organic light-emitting diode display, or the like. The user input unit 1107 includes a touch panel 11071 and other input devices 11072. The touch panel 11071 is also referred to as a touchscreen. The touch panel 11071 may include two parts: a touch detection apparatus and a touch controller. The other input devices 11072 may include, but are not limited to a physical keyboard, a function button (for example, a volume control button or a power button), a trackball, a mouse, and a joystick. Details are not described herein.

In this embodiment of this application, the radio frequency unit 1101 transmits downlink data received from a network-side device to the processor 1110 for processing, and in addition, transmits uplink data to the network-side device. Generally, the radio frequency unit 1101 includes but is not limited to an antenna, at least one amplifier, a transceiver, a coupler, a low noise amplifier, a duplexer, and the like.

The memory 1109 may be configured to store software programs or instructions and various data. The memory 1109 may mainly include a program or instruction storage area and a data storage area. The program or instruction storage area may store an operating system, an application program or instructions required by at least one function (for example, a sound playback function or an image playback function), and the like. In addition, the memory 1109 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other volatile solid-state storage device.

The processor 1110 may include one or more processing units. Optionally, the processor 1110 may integrate an application processor and a modem processor. The application processor mainly processes an operating system, a user interface, application programs or instructions, and the like. The modem processor mainly processes radio communication, for example, being a baseband processor. It can be understood that the modem processor may alternatively be not integrated in the processor 1110.

The radio frequency unit 1101 is configured to receive an indication message, where the indication message is used to indicate a second device to enable or disable a sensing function; and the processor 1110 is configured to enable or disable the sensing function according to the indication message.

Optionally, the indication message includes at least one of the following:
sensing function enable or disable flag;
identification of the second device;
time when the sensing function is enabled or disabled;
area in which the sensing function is enabled or disabled;
type of the sensing function to be enabled or disabled;
application scope of a sensing result;
configuration information of a sensing reference node or sensing cooperative node to be enabled or disabled;
requirement information for sensing performance;
requirement information for a sensing mode;
requirement information for a sensing signal; and
requirement information for a sensing measurement result or sensing measurement quantity.

Optionally, the requirement information for sensing performance includes at least one of the following:
maximum sensing resolution;
maximum sensing range;
minimum sensing delay;
minimum sensing error or maximum sensing accuracy; and
maximum sensing information update frequency.

Optionally, the requirement information for a sensing mode includes at least one of the following:
single-station sensing mode;
multi-station sensing mode;
multi-station cooperative sensing mode;
active sensing mode;
passive sensing mode;
continuous sensing mode; and
real-time sensing mode.

Optionally, the requirement information for a sensing signal includes at least one of the following:
information about waveforms available for the sensing signal;
maximum subcarrier spacing of the sensing signal;
maximum guard interval of the sensing signal;
maximum bandwidth of the sensing signal;
maximum burst duration of the sensing signal;
minimum time-domain interval of the sensing signal;
maximum transmit power or maximum equivalent isotropic radiated power EIRP of the sensing signal;
signal format usable for the sensing signal;
signal direction of the sensing signal;
time resource for the sensing signal;
frequency resource for the sensing signal;
antenna information corresponding to the sensing signal;
beam width of the sensing signal;
quantization accuracy of digital-to-analog conversion D/A of the sensing signal;
the number of cooperative detection devices corresponding to the sensing signal; and
cooperative detection mode corresponding to the sensing signal.

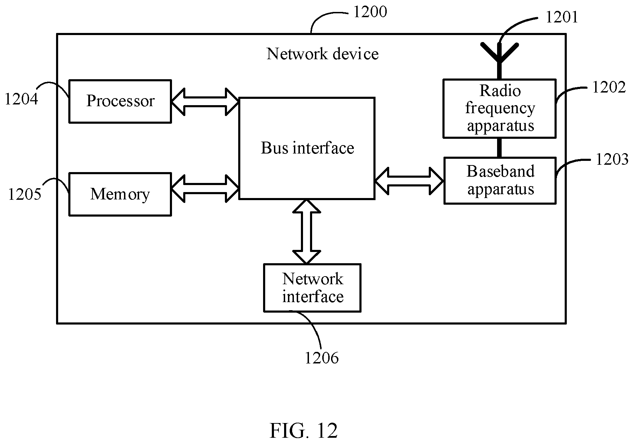

Specifically, this embodiment of this application further provides a communication device, where the communication device is a network device, and the network device may be the foregoing first device or the second device. As shown in FIG. 12, the network device 1200 includes an antenna 1201, a radio frequency apparatus 1202, and a baseband apparatus 1203. The antenna 1201 is connected to the radio frequency apparatus 1202. In an uplink direction, the radio frequency apparatus 1202 receives information through the antenna 1201, and transmits the received information to the baseband apparatus 1203 for processing. In a downlink direction, the baseband apparatus 1203 processes to-be-transmitted information, and transmits the information to the radio frequency apparatus 1202; and the radio frequency apparatus 1202 processes the received information and then transmits the information out by using the antenna 1201.

The frequency band processing apparatus may be located in the baseband apparatus 1203. The method performed by the first device or the second device in the foregoing embodiment may be implemented in the baseband apparatus 1203, and the baseband apparatus 1203 includes a processor 1204 and a memory 1205.

The baseband apparatus 1203 may include, for example, at least one baseband processing unit, where a plurality of chips are disposed on the baseband processing unit. As shown in FIG. 12, one of the chips is, for example, the processor 1204, connected to the memory 1205, to invoke a program in the memory 1205 to perform the operation of the first device or the second device shown in the foregoing method embodiment.

The baseband apparatus 1203 may further include a network interface 1206, configured to exchange information with the radio frequency apparatus 1202, where the interface is, for example, a common public radio interface (common public radio interface, CPRI).

Specifically, the network device (the first device or the second device) in this embodiment of this application further includes: instructions or a program stored in the memory 1205 and capable of running on the processor 1204. The processor 1204 invokes the instructions or program in the memory 1205 to execute the method executed by the modules shown in FIG. 8 or FIG. 9, with the same technical effects achieved. To avoid repetition, details are not described herein again.

An embodiment of this application further provides a readable storage medium. The readable storage medium may be volatile or non-volatile. The readable storage medium stores a program or instructions. When the program or instructions are executed by a processor, all processes of the foregoing sensing method embodiment are implemented, with the same technical effect achieved. To avoid repetition, details are not described again herein described herein again.

The processor is the processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the sensing method, with the same technical effect achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a non-transitory storage medium, and when the computer program product is executed by at least one processor so as to implement the steps of the foregoing sensing method embodiment, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a software product. The software product is stored in a storage medium (for example, a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A sensing method, comprising:
receiving, by a first device, a first request, wherein the first request is used for requesting to enable or disable a sensing function of a second device; and
transmitting, by the first device, an indication message to the second device according to the first request, wherein the indication message is used to indicate the second device to enable or disable the sensing function.

2. The method according to claim 1, wherein the first request comprises at least one of the following:
sensing function enable or disable flag;
identification of the second device;
time when the sensing function is enabled or disabled;
area in which the sensing function is enabled or disabled;
type of the sensing function to be enabled or disabled;
application scope of a sensing result;
configuration information of a sensing reference node or sensing cooperative node to be enabled or disabled;
requirement information for sensing performance;
requirement information for a sensing mode;
requirement information for a sensing signal; and
requirement information for a sensing measurement result or sensing measurement quantity.

3. The method according to claim 1, wherein the indication message comprises at least one of the following:
sensing function enable or disable flag;
identification of the second device;
time when the sensing function is enabled or disabled;
area in which the sensing function is enabled or disabled;
type of the sensing function to be enabled or disabled;
application scope of a sensing result;
configuration information of a sensing reference node or sensing cooperative node to be enabled or disabled;
requirement information for sensing performance;
requirement information for a sensing mode;
requirement information for a sensing signal; and
requirement information for a sensing measurement result or sensing measurement quantity.

4. The method according to claim 2 or 3, wherein the configuration information of a sensing reference node or sensing cooperative node to be enabled or disabled comprises at least one of the following:
identification information of the sensing reference node or sensing cooperative node;
the number of sensing reference nodes or sensing cooperative nodes;
requirement information for a sensing measurement quantity or sensing measurement result of the sensing reference node or the sensing cooperative node;
requirement information for sensing performance of the sensing reference node or sensing cooperative node;
requirement information for a sensing mode of the sensing reference node or sensing cooperative node; and
requirement information for a sensing signal of the sensing reference node or sensing cooperative node.

5. The method according to claim 2, 3, or 4, wherein the requirement information for sensing performance comprises at least one of the following:
maximum sensing resolution;
maximum sensing range;
minimum sensing delay;
minimum sensing error or maximum sensing accuracy; and
maximum sensing information update frequency.

6. The method according to claim 2, 3, or 4, wherein the requirement information for a sensing mode comprises at least one of the following:
single-station sensing mode;
multi-station sensing mode;
multi-station cooperative sensing mode;
active sensing mode;
passive sensing mode;
continuous sensing mode or periodic sensing mode; and
real-time sensing mode.

7. The method according to claim 2, 3, or 4, wherein the requirement information for a sensing signal comprises at least one of the following:
information about waveforms available for the sensing signal;
maximum subcarrier spacing of the sensing signal;
maximum guard interval of the sensing signal;
maximum bandwidth of the sensing signal;
maximum burst duration of the sensing signal;
minimum time-domain interval of the sensing signal;
maximum transmit power or maximum equivalent isotropic radiated power EIRP of the sensing signal;
signal format usable for the sensing signal;
signal direction of the sensing signal;
time resource for the sensing signal;
frequency resource for the sensing signal;
antenna information corresponding to the sensing signal;
beam width of the sensing signal;
quantization accuracy of digital-to-analog conversion D/A of the sensing signal;
the number of cooperative detection devices corresponding to the sensing signal; and
cooperative detection mode corresponding to the sensing signal.

8. The method according to claim 2, 3, or 4, wherein the requirement information for a sensing measurement result or sensing measurement quantity comprises at least one of the following:
allowing or prohibiting measurement of at least one sensing measurement quantity; and
allowing or prohibiting reporting of at least one sensing measurement result.

9. The method according to claim 1, further comprising:
determining a target device meeting at least one of the following as the second device:
position of the target device is located in a preset area;
the target device has a target sensing capability;
an access device of the target device is located in a preset area; and
an access device of the target device has a target sensing capability.

10. The method according to claim 1, wherein the second device comprises at least one device or sensing network element with a sensing network function, and the at least one device or sensing network element with a sensing network function is associated with the sensing function corresponding to the first request.

11. The method according to claim 1, wherein the sensing function comprises a preset category of sensing functions; wherein
the preset category is classified based on at least one of the following:
scale range of a sensing function;
privacy requirement for a sensing function;
power consumption information corresponding to a sensing function;
resource occupation information corresponding to a sensing function; and
sensing measurement quantity corresponding to a sensing function.

12. The method according to claim 1, wherein
the first device is a device with a sensing network function, and the second device comprises at least one of a base station and a terminal; or
the first device is a base station, and the second device is a terminal; or
the first device is a device with an access and mobility management function, and the second device comprises at least one of a base station, a terminal, and a device with a sensing network function.

13. A sensing method, comprising:
receiving, by a second device, an indication message, wherein the indication message is used to indicate the second device to enable or disable a sensing function; and
enabling or disabling, by the second device, the sensing function according to the indication message.

14. The method according to claim 13, wherein the indication message comprises at least one of the following:
sensing function enable or disable flag;
identification of the second device;
time when the sensing function is enabled or disabled;
area in which the sensing function is enabled or disabled;
type of the sensing function to be enabled or disabled;
application scope of a sensing result;
configuration information of a sensing reference node or sensing cooperative node to be enabled or disabled;
requirement information for sensing performance;
requirement information for a sensing mode;
requirement information for a sensing signal; and
requirement information for a sensing measurement result or sensing measurement quantity.

15. The method according to claim 14, wherein the requirement information for sensing performance comprises at least one of the following:
maximum sensing resolution;
maximum sensing range;
minimum sensing delay;
minimum sensing error or maximum sensing accuracy; and
maximum sensing information update frequency.

16. The method according to claim 14, wherein the requirement information for a sensing mode comprises at least one of the following:
single-station sensing mode;
multi-station sensing mode;
multi-station cooperative sensing mode;
active sensing mode;
passive sensing mode;
continuous sensing mode; and
real-time sensing mode.

17. The method according to claim 14, wherein the requirement information for a sensing signal comprises at least one of the following:
information about waveforms available for the sensing signal;
maximum subcarrier spacing of the sensing signal;
maximum guard interval of the sensing signal;
maximum bandwidth of the sensing signal;
maximum burst duration of the sensing signal;
minimum time-domain interval of the sensing signal;
maximum transmit power or maximum equivalent isotropic radiated power EIRP of the sensing signal;
signal format usable for the sensing signal;
signal direction of the sensing signal;
time resource for the sensing signal;
frequency resource for the sensing signal;
antenna information corresponding to the sensing signal;
beam width of the sensing signal;
quantization accuracy of digital-to-analog conversion D/A of the sensing signal;
the number of cooperative detection devices corresponding to the sensing signal; and
cooperative detection mode corresponding to the sensing signal.

18. A sensing apparatus, comprising:
a first receiving module, configured to receive a first request, wherein the first request is used for requesting to enable or disable a sensing function of a second device; and
a first transmitting module, configured to transmit an indication message to the second device according to the first request, wherein the indication message is used to indicate the second device to enable or disable the sensing function.

19. The apparatus according to claim 18, wherein the first request comprises at least one of the following:
sensing function enable or disable flag;
identification of the second device;
time when the sensing function is enabled or disabled;
area in which the sensing function is enabled or disabled;
type of the sensing function to be enabled or disabled;
application scope of a sensing result;
configuration information of a sensing reference node or sensing cooperative node to be enabled or disabled;
requirement information for sensing performance;
requirement information for a sensing mode;
requirement information for a sensing signal; and
requirement information for a sensing measurement result or sensing measurement quantity.

20. A sensing apparatus, comprising:
a second receiving module, configured to receive an indication message, wherein the indication message is used to indicate a second device to enable or disable a sensing function; and
a processing module, configured to enable or disable the sensing function according to the indication message.

21. The apparatus according to claim 20, wherein the indication message comprises at least one of the following:
sensing function enable or disable flag;
identification of the second device;
time when the sensing function is enabled or disabled;
area in which the sensing function is enabled or disabled;
type of the sensing function to be enabled or disabled;
application scope of a sensing result;
configuration information of a sensing reference node or sensing cooperative node to be enabled or disabled;
requirement information for sensing performance;
requirement information for a sensing mode;
requirement information for a sensing signal; and
requirement information for a sensing measurement result or sensing measurement quantity.

22. A communication device, comprising a processor, a memory, and a program or instructions stored in the memory and capable of running on the processor, wherein when the program or instructions are executed by the processor, the steps of the sensing method according to any one of claims 1 to 12 are implemented, or the steps of the sensing method according to any one of claims 13 to 17 are implemented.

23. A readable storage medium, wherein the readable storage medium has a program or instructions stored thereon; and when the program or instructions are executed by a processor, the steps of the sensing method according to any one of claims 1 to 12 are implemented, or the steps of the sensing method according to any one of claims 13 to 17 are implemented.
